# EUROPÄISCHE PATENTSCHRIFT

(11) **EP 4 153 874 B1**
(45) Veröffentlichungstag und Bekanntmachung des Hinweises auf die Patenterteilung: **12.06.2024**
(21) Anmeldenummer: 21722813.9
(22) Anmeldetag: 28.04.2021
(51) Int. Cl.: F16B 12/20

(54) **WERKZEUGLOSES ANZUGSELEMENT UND ZUGEHÖRIGER VERBINDUNGSBESCHLAG**
TOOL-FREE TIGHTENING ELEMENT AND CORRESPONDING CONNECTION FITTING
ÉLÉMENT DE SERRAGE SANS OUTIL ET RACCORD DE RACCORDEMENT CORRESPONDANT

(30) Priorität: 22.05.2020 DE 202020102943 U
(43) Veröffentlichungstag der Anmeldung: 29.03.2023
(73) Patentinhaber: Häfele Berlin GmbH & Co KG, 12307 Berlin (DE)
(72) Erfinder: BIRKNER, Robert, 12524 Berlin (DE); SAWATZKI, Gerd, 15518 Rauen (DE)
(74) Vertreter: Kohler Schmid Möbus Patentanwälte
(86) Internationale Anmeldenummer: PCT/EP2021/061077
(87) Internationale Veröffentlichungsnummer: WO 2021/233652

(56) Entgegenhaltungen:
- CN-A- 102 954 082
- DE-U1- 29 605 547
- DE-U1-202019 106 844
- US-A- 3 456 969
- US-A- 3 730 568

## Beschreibung

Die Erfindung betrifft ein Anzugselement zum werkzeuglosen Anziehen eines Spannbolzens gemäß dem Oberbegriff von Anspruch 1. Ein derartiges Anzugselement ist beispielsweise durch die DE 296 05 547 U1 bekannt geworden.

Solche Anzugselemente und Verbindungsbeschläge sind hinlänglich bekannt und dienen dazu, zwei winkelig, vorzugweise rechtwinklig, aufeinanderstoßende Möbelteile miteinander zu befestigten. Bekannte Anzugselemente weisen einen Antrieb für einen Schraubendreher auf, um das in eine Flächenbohrung eines Möbelteils eingesetzte Anzugselement zu verdrehen und so die beiden Möbelteile spaltfrei miteinander zu verbinden.

Aus DE 296 05 547 U1 ist ein Beschlag zum lösbaren Verbinden von Bauteilen, insbesondere von plattenförmigen Bauteilen wie Möbelwänden, bekannt. Der Beschlag umfasst einen in einem Möbelteil verankerten Dübel, in dem ein zapfenartiges Verbindungsglied verankert ist, an dem ein im anderen Möbelteil achslos gelagerter Drehriegel mit einer Spannfläche angreift. Das Verbindungsglied besteht aus einem in den Dübel ragenden Spreizzapfen und einem daran um eine Achse kippbar gelagerten Verankerungsteil, an dem der Drehriegel angreift.

Ähnliche Beschläge sind auch aus US 3 730 568 A und US 3 456 969 A bekannt. Demgegenüber ist es die Aufgabe der Erfindung, ein Anzugselement der eingangs genannten Art weiter zu verbessern, insbesondere werkzeuglos verdrehen zu können.

Diese Aufgabe wird erfindungsgemäß durch ein Anzugselement mit den Merkmalen von Anspruch 1 gelöst.

In der hochgeklappten Endstellung liegen die beiden Handhaben bevorzugt aneinander an und bilden so eine gemeinsame Handhabe. Die beiden Handhaben sind vorzugsweise jeweils als halbkreisförmige Deckelhälften ausgebildet, die in der heruntergeklappten Endstellung gemeinsam einen kreisförmigen Deckel ausbilden, welcher vorteilhafterweise die Stirnseite des Gehäuses vollständig abdeckt und radial nach außen über das Gehäuse vorsteht.

Besonders bevorzugt sind die Handhaben in der heruntergeklappten Endstellung mit dem Gehäuse verrastet. In einer vorteilhaften Weiterbildung weist jede Handhabe einen Rastvorsprung auf, der in der heruntergeklappten Endstellung in einer Rastaufnahme des Gehäuses eingerastet ist, oder umgekehrt. In einer anderen vorteilhaften Weiterbildung weist jede Handhabe einen Haken auf, der in der heruntergeklappten Endstellung einen Hinterschnitt des Gehäuses rastend hintergreift, oder umgekehrt.

Die Schwenkachse kann beispielsweise durch eine Zapfen/Loch-Rastverbindung zwischen der mindestens einen Handhabe und mindestens einem Lagerbock des Gehäuses oder durch eine Lagervorsprung/Lageraufnahme-Verbindung zwischen der klappbaren und der feststehenden Deckelhälfte gebildet sein.

Vorzugweise weist das Gehäuse eine Umfangswand mit einem sich in Umfangsrichtung erstreckenden Umfangsschlitz auf, wobei die Innenseite der Umfangswand zu beiden Seiten des Umfangsschlitzes eine bezüglich der Mittelachse des Gehäuses exzentrische Anzugskontur aufweist.

Die Erfindung betrifft außerdem einen Verbindungsbeschlag zum lösbaren Verbinden zweier winkelig, vorzugweise rechtwinklig, aufeinanderstoßender Möbelteile, mit einem an dem einen Möbelteil zu verankernden Spannbolzen und mit einem wie oben beschriebenen, in einer Flächenbohrung des anderen Möbelteils einzusetzenden Anzugselement.

Die Erfindung betrifft schließlich auch eine Möbelanordnung mit zwei winkelig, vorzugweise rechtwinklig, aufeinanderstoßenden Möbelteilen, die mittels des Verbindungsbeschlags miteinander befestigt sind, wobei der Spannbolzen an einer Stirnseite des einen Möbelteils verankert ist und wobei das Anzugselement in eine Flächenbohrung des anderen Möbelteils eingesetzt ist und einen Bolzenkopf des Spannbolzens hintergreift. Durch eine Drehung des Anzugselements wird der Bolzenkopf des Spannbolzens gegriffen und angezogen und so die beiden Möbelteile spaltfrei aneinander befestigt. Nach dem Verdrehen des Anzugselementes wird die mindestens eine Handhabe heruntergeklappt und bevorzugt verrastet.

Weitere Vorteile der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: ein erfindungsgemäßes Anzugselement mit zwei klappbaren (Dreh)Handhaben, wobei in Fig. 1a beide Handhaben hochgeklappt, in Fig. 1b die eine Handhabe hoch- und die andere Handhabe heruntergeklappt und in Fig. 1c beide Handhaben heruntergeklappt sind;
- Fig. 2: die Einzelteile des erfindungsgemäßen Anzugselements;
- Fign. 3a, 3b: eine Modifikation des erfindungsgemäßen Anzugselements in der hochgeklappten Endstellung (Fig. 3a) und in einer Detailansicht der Handhabe (Fig. 3b);
- Fign. 4a-4f: den Montageablauf beim Verbinden zweier Möbelplatten mittels des in den Fign. 1 bis 3 gezeigten Anzugselements;
- Fign. 5a, 5b: eine weitere Modifikation des erfindungsgemäßen Anzugselements mit einer einzigen klappbaren (Dreh)Handhabe, die in Fig. 5a in der hochgeklappten und in Fig. 5b in der heruntergekappten Endstellung gezeigt ist;
- Fig. 6: die Einzelteile des erfindungsgemäßen Anzugselements von Fig. 5; und
- Fign. 7a-7d: den Montageablauf beim Verbinden zweier Möbelplatten mittels des in Fig. 5 gezeigten Anzugselements.

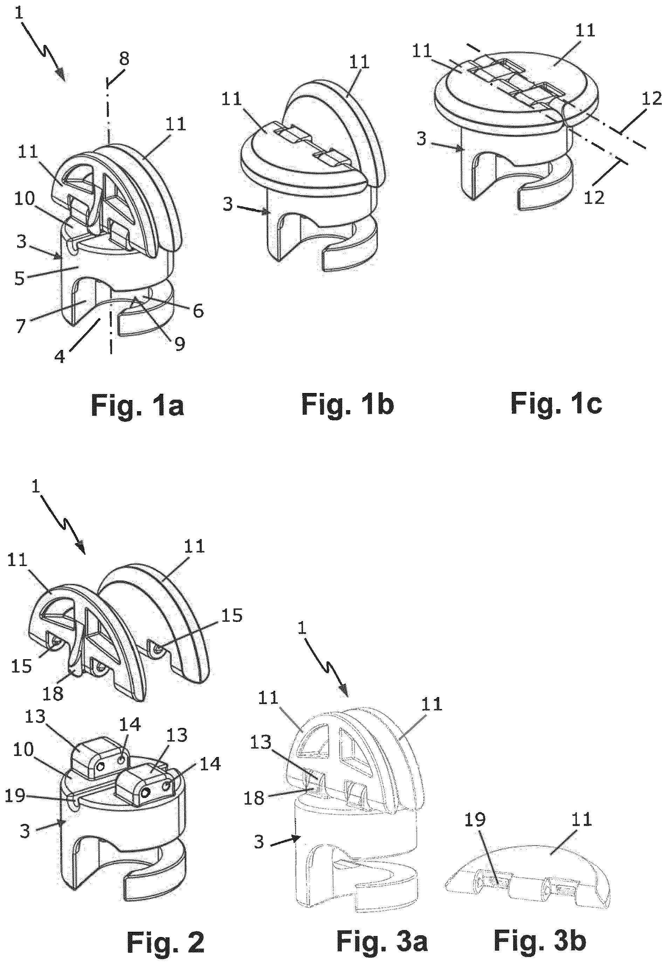

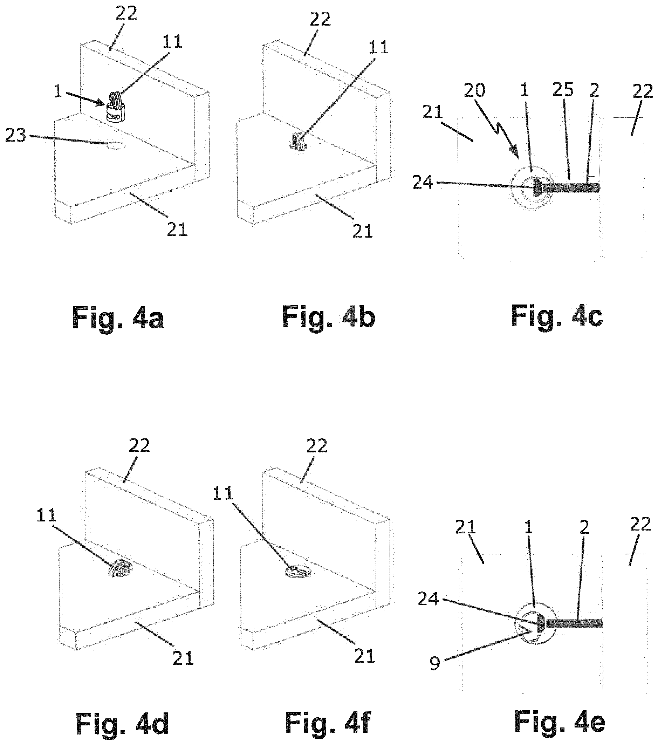

Das in **Fign. 1a-1c** gezeigte Anzugselement **1** dient zum werkzeuglosen Anziehen eines Spannbolzens **2** (Fign. 4c, 4e).

Das Anzugselement 1 weist ein zylindrisches, topfförmiges Gehäuse **3** mit einer hier nach unten offenen Topföffnung **4** und mit einer Umfangswand **5** auf, in der sich in Umfangsrichtung ein Umfangsschlitz **6** erstreckt. An einem Schlitzende mündet der Umfangsschlitz 6 in eine nach unten hin offene Aussparung **7** der Umfangswand 5. Die Innenseite der Umfangswand 5 weist zu beiden Seiten des Umfangsschlitzes 6 eine bezüglich der Mittelachse **8** des Gehäuses 3 exzentrische Anzugskontur **9** auf.

Auf der der Topföffnung 4 gegenüberliegenden Stirnseite **10** des Gehäuses 3 sind zwei plattenförmige (Dreh)Handhaben **11** um rechtwinklig zur Mittelachse 8 verlaufende, parallele Achsen **12** schwenkbar zwischen einer vom Gehäuse 3 abstehenden, hochgeklappten Endstellung (Fig. 1a) und einer an der Stirnseite 10 anliegenden, heruntergeklappten Endstellung (Fig. 1c) gelagert. In der hochgeklappten Endstellung liegen die beiden Handhaben 11 aneinander an und bilden so eine gemeinsame Handhabe. Die beiden Handhaben 11 sind jeweils als halbkreisförmige Deckelhälften ausgebildet, die in der heruntergeklappten Endstellung gemeinsam einen kreisförmigen Deckel ausbilden, welcher die Stirnseite 10 des Gehäuses 3 vollständig abdeckt und radial nach außen über das Gehäuse 3 vorsteht.

Vorzugsweise sind das Gehäuse 3 aus Metall, z.B. Zinkdruckguß, und die Handhaben 11 aus Kunststoff gebildet.

Wie in **Fig. 2** gezeigt, weist die Stirnseite 10 zwei Lagerböcke **13** mit jeweils beidseitigen Rastlöchern **14** auf, in denen die beiden Handhaben 11 mit Rastzapfen **15** eingerastet sind. Die Rastlöcher und -zapfen 14, 15 definieren auch die Schwenkachsen 12 der Handhaben 11. An den beiden Handhaben 11 ist unterseitig jeweils ein Rastvorsprung **18** angeformt, der in der heruntergeklappten Endstellung in eine Rastaufnahme **19** in der Stirnseite 10 eingerastet ist, um so die beiden Handhaben 11 in der heruntergeklappten Endstellung mit dem Gehäuse 3 zu verrasten.

Das Anzugselement 1 bildet zusammen mit dem Spannbolzen 2 einen in Fig. 4c gezeigten Verbindungsbeschlag **20.**

Vom Anzugselement der Fign. 1 und 2 unterscheidet sich das in **Fign. 3a, 3b** gezeigte Anzugselement 1 lediglich dadurch, dass hier die beiden Lagerböcke 13 jeweils einen Rastvorsprung 18 und die beiden Handhaben 11 jeweils zwei Rastaufnahmen 19 aufweisen. In der heruntergeklappten Endstellung sind die Rastvorsprünge 18 in die Rastaufnahmen 19 eingerastet, um so die beiden Handhaben 11 in der heruntergeklappten Endstellung mit dem Gehäuse 3 zu verrasten.

In den **Fign. 4a bis 4f** ist der Montageablauf beim Verbinden zweier winkelig, hier rechtwinklig aufeinanderstoßender Möbelplatten **21**, **22** mittels des Anzugselements 1 gezeigt.

In eine Flächenbohrung **23** der einen, ersten Möbelplatte 21 wird das Anzugelement 1 eingesetzt (Fign. 4a, 4b), wobei sich die beiden Handhaben 11 jeweils in der hochgeklappten Endstellung befinden. In der anderen Möbelplatte 22 ist der Spannbolzen 2 verankert, der sich mit seinem Bolzenkopf **24** durch eine Bohrung **25** in der Stirnseite der ersten Möbelplatte 21 und die offene Aussparung 7 des Anzugselements 1 hindurch bis in das Innere des Anzugselements 1 erstreckt (Fig. 4c). Anschließend wird das Anzugselement 1 in der Flächenbohrung 23 mithilfe der beiden hochgeklappten Handhaben 11, also werkzeuglos, um z.B. 240° gedreht (Fig. 4d). Dadurch tritt der Spannbolzen 2 in den Umfangsschlitz 6 ein und wird der nun von der Anzugskontur 9 hintergriffene Bolzenkopf 24 weiter eingezogen, bis die beiden Möbelplatten 21, 22 spaltfrei aneinander anliegen (Fig. 4e). Abschließend werden die beiden Handhaben 11 heruntergeklappt und verrastet, um die Flächenbohrung 23 und das Gehäuse 3 abzudecken (Fig. 4f).

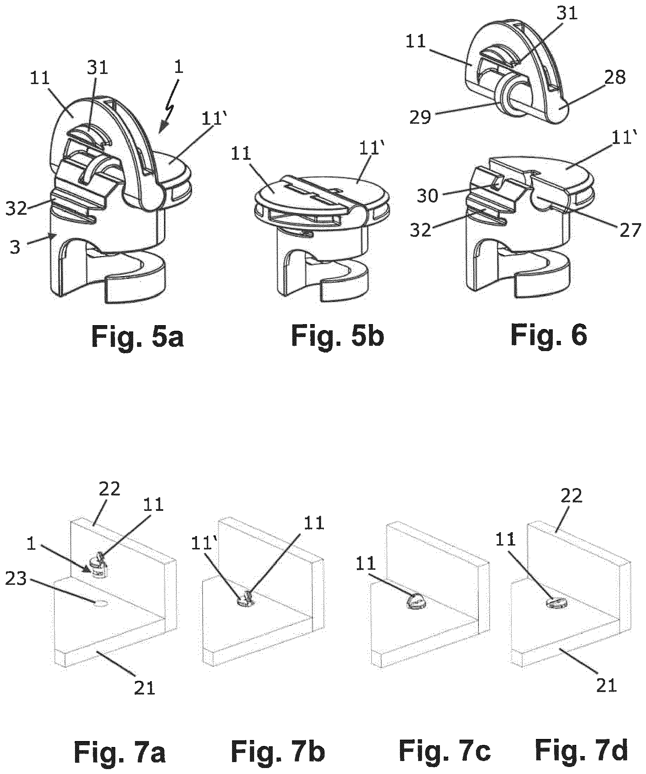

Vom Anzugselement der Fign. 1 und 2 unterscheidet sich das in **Fign. 5 und** 6 gezeigte Anzugselement 1 durch eine einzige (Dreh)Handhabe 11 in Form einer halbkreisförmigen, ersten Deckelhälfte, die schwenkbar an einer halbkreisförmigen, zweiten Deckelhälfte **11'** gelagert ist. Die zweite Deckelhälfte 11' ist stirnseitig am Gehäuse 3 feststehend angeformt und steht radial nach außen über das Gehäuse 3 vor. In der heruntergeklappten Endstellung bilden die beiden Deckelhälfte 11, 11' gemeinsam einen kreisförmigen Deckel aus, der radial nach außen über das Gehäuse 3 vorsteht. Die zweite Deckelhälfte 11' weist an ihrer Stirnseite eine halbzylinderförmige Lageraufnahme **27** auf, in der ein zylinderförmiger Lagervorsprung **28** der Handhabe 11 eingerastet und drehbar gelagert ist. Am Lagervorsprung 28 ist ein Ringbund **29** angeformt, der in eine Queraussparung **30** der Lageraufnahme 27 eingreift, um so den Lagervorsprung 28 in der Lageraufnahme 27 axial unverschiebbar festzulegen. An der Handhabe 11 ist unterseitig ein Haken **31** angeformt, der in der heruntergeklappten Endstellung einen Hinterschnitt **32** des Gehäuses 3 rastend hintergreift, um so die Handhabe 11 in der heruntergeklappten Endstellung mit dem Gehäuse 3 zu verrasten.

In den **Fign. 7a bis 7d** ist der Montageablauf beim Verbinden zweier winkelig, hier rechtwinklig aufeinanderstoßender Möbelplatten 21, 22 mittels des in Fign. 5 und 6 gezeigten Anzugselements 1 gezeigt.

In die Flächenbohrung 23 der einen, ersten Möbelplatte 21 wird das Anzugelement 1 mit hochgeklappter Handhabe 11 eingesetzt (Fig. 7a), bis die zweite Deckelhälfte 11 an der ersten Möbelplatte 21 anliegt (Fig. 7b). Anschließend wird das Anzugselement 1 in der Flächenbohrung 23 mithilfe der hochgeklappten Handhabe 11, also werkzeuglos, um z.B. 240° gedreht (Fig. 7c). Dadurch tritt der Spannbolzen 2 in den Umfangsschlitz 6 ein und wird der nun von der Anzugskontur 9 hintergriffene Bolzenkopf 24 weiter eingezogen, bis die beiden Möbelplatten 21, 22 spaltfrei aneinander anliegen. Abschließend wird die Handhabe 11 heruntergeklappt und verrastet, um die Flächenbohrung 23 und das Gehäuse 3 abzudecken (Fig. 7d).

## Patentansprüche

1. Anzugselement (1) zum werkzeuglosen Anziehen eines Spannbolzens (2), aufweisend ein zylindrisches, topfförmiges Gehäuse (3) mit einer Topföffnung (4), wobei auf der der Topföffnung (4) gegenüberliegenden Stirnseite (10) des Gehäuses (3) mindestens eine Handhabe (11) um eine rechtwinklig zur Mittelachse (8) des Gehäuses (3) verlaufende Achse (12) schwenkbar zwischen einer vom Gehäuse (3) abstehenden, hochgeklappten Stellung und einer an der Stirnseite (10) anliegenden, heruntergeklappten Endstellung gelagert ist,
**dadurch gekennzeichnet,**
**dass** auf der der Topföffnung (4) gegenüberliegenden Stirnseite (10) des Gehäuses (3) zwei Handhaben (11) um rechtwinklig zur Mittelachse (8) verlaufende Achsen (12) schwenkbar zwischen einer vom Gehäuse (3) abstehenden, hochgeklappten Stellung und einer an der Stirnseite (10) anliegenden, heruntergeklappten Endstellung gelagert sind.

2. Anzugselement nach Anspruch 1, **dadurch gekennzeichnet, dass** die beiden Handhaben (11) jeweils als insbesondere halbkreisförmige Deckelhälften ausgebildet sind, die in der heruntergeklappten Endstellung gemeinsam einen insbesondere kreisförmigen Deckel ausbilden.

3. Anzugselement nach Anspruch 1 oder 2, **dadurch gekennzeichnet, dass** die beiden Handhaben (11) in der heruntergeklappten Endstellung radial nach außen über das Gehäuse (2) vorstehen.

4. Anzugselement nach einem der vorhergehenden Ansprüche, **dadurch gekennzeichnet, dass** die Handhaben (11) in der heruntergeklappten Endstellung mit dem Gehäuse (3) verrastet sind.

5. Anzugselement nach Anspruch 4, **dadurch gekennzeichnet, dass** jede Handhabe (11) einen Rastvorsprung (18) aufweist, der in der heruntergeklappten Endstellung in einer Rastaufnahme (19) des Gehäuses (3) eingerastet ist, oder umgekehrt.

6. Anzugselement nach Anspruch 4, **dadurch gekennzeichnet, dass** jede Handhabe (11) einen Haken (31) aufweist, der in der heruntergeklappten Endstellung einen Hinterschnitt (32) des Gehäuses (2) rastend hintergreift, oder umgekehrt.

7. Anzugselement nach einem der vorhergehenden Ansprüche, **dadurch gekennzeichnet, dass** die Schwenkachse (11) durch eine Zapfen/Loch-Rastverbindung (14, 15) zwischen der mindestens einen Handhabe (11) und mindestens einem Lagerbock (13) des Gehäuses (3) gebildet ist.

8. Anzugselement nach einem der vorhergehenden Ansprüche, **dadurch gekennzeichnet, dass** das Gehäuses (3) eine Umfangswand (5) mit einem sich in Umfangsrichtung erstreckenden Umfangsschlitz (6) aufweist, wobei die Innenseite der Umfangswand (5) zu beiden Seiten des Umfangsschlitzes (6) eine bezüglich der Mittelachse (8) des Gehäuses (3) exzentrische Anzugskontur (9) aufweist.

9. Verbindungsbeschlag (20) zum lösbaren Verbinden zweier winkelig, vorzugweise rechtwinklig, aufeinanderstoßender Möbelteile (21, 22), mit einem an dem einen Möbelteil (22) zu verankernden Spannbolzen (2) und mit einem in einer Flächenbohrung (23) des anderen Möbelteils (21) einzusetzenden Anzugselement (1) nach einem der vorhergehenden Ansprüche.

10. Möbelanordnung mit zwei winkelig, vorzugweise rechtwinklig, aufeinanderstoßenden Möbelteilen (21, 22), die mittels des Verbindungsbeschlags (20) nach Anspruch 9 miteinander befestigt sind, wobei der Spannbolzen (2) an einer Stirnseite des einen Möbelteils (22) verankert ist und wobei das Anzugselement (1) in eine Flächenbohrung (23) des anderen Möbelteils (21) eingesetzt ist und einen Bolzenkopf (24) des Spannbolzens (2) hintergreift.

## Claims

1. A tightening element (1) for the tool-free tightening of a clamping bolt (2), comprising a cylindrical pot-shaped housing (3) having a pot opening (4), wherein at the end side (10) of the housing (3) opposite the pot opening (4), at least one handle (11) is pivotably supported about an axis (12), which extends at right-angles to the center axis (8) of the housing (3), between a folded-up position which protrudes from the housing (3) and a folded-down end position which rests against the end side (10),
**characterized in that**
at the end side (10) of the housing (3) opposite the pot opening (4), two handles (11) are pivotably supported about axes (12), which extend at right-angles to the center axis (8), between a folded-up position which protrudes from the housing (3) and a folded-down end position which rests against the end side (10).

2. The tightening element as claimed in claim 1, **characterized in that** the two handles (11) are each in the form of in particular semi-circular cover halves which in the folded-down end position together form an in particular circular cover.

3. The tightening element as claimed in claim 1 or 2, **characterized in that** the two handles (11) in the folded-down end position protrude radially outward over the housing (3).

4. The tightening element as claimed in one of the preceding claims, **characterized in that** the handles (11) in the folded-down end position are locked with the housing (3).

5. The tightening element as claimed in claim 4, **characterized in that** each handle (11) has a locking projection (18) which in the folded-down end position is engaged in a locking receiving member (19) of the housing (3), or vice versa.

6. The tightening element as claimed in claim 4, **characterized in that** each handle (11) has a hook (31) which in the folded-down end position engages in a locking manner behind an undercut (32) of the housing (3), or vice versa.

7. The tightening element as claimed in one of the preceding claims, **characterized in that** the pivot axis (12) is formed by a pin/hole locking connection (14, 15) between the at least one handle (11) and at least one bearing block (13) of the housing (3).

8. The tightening element as claimed in one of the preceding claims, **characterized in that** the housing (3) has a circumferential wall (5) having a circumferential slot (6) which extends in a circumferential direction, wherein the inner side of the circumferential wall (5) at both sides of the circumferential slot (6) has a tightening contour (9) which is eccentric relative to the center axis (8) of the housing (3).

9. A connection fitting (20) for releasably connecting two items of furniture (21, 22) which abut each other at an angle, preferably at right-angles, comprising a clamping bolt (2) which is intended to be anchored to one item of furniture (22) and comprising a tightening element (1) as claimed in one of the preceding claims which is intended to be inserted in a surface hole (23) of the other item of furniture (21).

10. A furniture arrangement comprising two items of furniture (21, 22) which abut each other at an angle, preferably at right-angles, and which are secured to each other by means of the connection fitting (20) as claimed in claim 9, wherein the clamping bolt (2) is anchored to an end side of one item of furniture (22) and wherein the tightening element (1) is inserted into a surface hole (23) of the other item of furniture (21) and engages behind a bolt head (24) of the clamping bolt (2).

## Revendications

1. Elément de serrage (1) conçu pour bloquer un boulon de serrage (2) avec absence d'outil, muni d'un boîtier cylindrique (3) en forme de pot comportant une ouverture (4), sachant qu'au moins une poignée (11) est montée pivotante à la face frontale (10) du boîtier (3) tournée à l'opposé de ladite ouverture (4) du pot, autour d'un axe (12) s'étendant perpendiculairement à l'axe médian (8) dudit boîtier (3), entre une position relevée par pivotement, en saillie au-delà dudit boîtier (3), et une position extrême abaissée par pivotement, en applique contre ladite face frontale (10),
**caractérisé par le fait que**
deux poignées (11) sont montées pivotantes à la face frontale (10) du boîtier (3) tournée à l'opposé de l'ouverture (4) du pot, autour d'axes (12) s'étendant perpendiculairement à l'axe médian (8), entre une position relevée par pivotement, en saillie au-delà dudit boîtier (3), et une position extrême abaissée par pivotement, en applique contre ladite face frontale (10).

2. Elément de serrage selon la revendication 1, **caractérisé par le fait que** les deux poignées (11) sont respectivement réalisées sous la forme de moitiés de couvercle notamment semi-circulaires, qui donnent conjointement naissance à un couvercle notamment circulaire dans la position extrême abaissée par pivotement.

3. Elément de serrage selon la revendication 1 ou 2, **caractérisé par le fait que** les deux poignées (11) font saillie radialement vers l'extérieur, au-delà du boîtier (3), dans la position extrême abaissée par pivotement.

4. Elément de serrage selon l'une des revendications précédentes, **caractérisé par le fait que** les poignées (11) sont reliées au boîtier (3) par encliquetage dans la position extrême abaissée par pivotement.

5. Elément de serrage selon la revendication 4, **caractérisé par le fait que** chaque poignée (11) est dotée d'une protubérance encliquetable (18) qui, dans la position extrême abaissée par pivotement, est crantée dans un logement d'encliquetage (19) du boîtier (3), ou inversement.

6. Elément de serrage selon la revendication 4, **caractérisé par le fait que** chaque poignée (11) est pourvue d'un crochet (31) qui, dans la position extrême abaissée par pivotement, emprisonne par-derrière une contre-dépouille (32) du boîtier (3) avec effet de crantage, ou inversement.

7. Elément de serrage selon l'une des revendications précédentes, **caractérisé par le fait que** l'axe de pivotement (12) est matérialisé par une liaison encliquetable tétons/trous (14, 15) entre la poignée (11), à présence minimale, et au moins un sabot de palier (13) du boîtier (3).

8. Elément de serrage selon l'une des revendications précédentes, **caractérisé par le fait que** le boîtier (3) est nanti d'une paroi périphérique (5) percée d'une fente périphérique (6) s'étendant dans la direction du pourtour, la face intérieure de ladite paroi périphérique (5) présentant, de part et d'autre de ladite fente périphérique (6), un profil de serrage (9) excentré par rapport à l'axe médian (8) dudit boîtier (3).

9. Ferrure de liaison (20) dévolue à la solidarisation libérable de deux parties de meuble (21, 22) qui se rencontrent mutuellement en décrivant un angle, de préférence un angle droit, comprenant un boulon de serrage (2) conçu pour être ancré à l'une (22) des parties du meuble et un élément de serrage (1) conforme à l'une des revendications précédentes, conçu pour être inséré dans un perçage (23) pratiqué dans la surface de l'autre partie (21) dudit meuble.

10. Agencement de meuble composé de deux parties de meuble (21, 22) qui se rencontrent mutuellement en décrivant un angle, de préférence un angle droit, et sont fixées l'une à l'autre au moyen de la ferrure de liaison (20) conforme à la revendication 9, sachant que le boulon de serrage (2) est ancré à une face extrême de l'une (22) des parties du meuble, et sachant que l'élément de serrage (1) est inséré dans un perçage (23) pratiqué dans la surface de l'autre partie (21) dudit meuble, et emprisonne par-derrière une tête (24) dudit boulon de serrage (2).
